# EUROPÄISCHE PATENTSCHRIFT

(11) **EP 4 054 903 B1**
(45) Veröffentlichungstag und Bekanntmachung des Hinweises auf die Patenterteilung: **17.07.2024**
(21) Anmeldenummer: 20780685.2
(22) Anmeldetag: 25.09.2020
(51) Int. Cl.: B60S 1/52, B60S 1/40, B60S 1/38

(54) **WISCHBLATTADAPTERVORRICHTUNG, WISCHBLATT MIT DER WISCHBLATTADAPTERVORRICHTUNG UND SCHEIBENWISCHER MIT DEM WISCHBLATT**
WIPER BLADE ADAPTER DEVICE, WIPER BLADE COMPRISING THE WIPER BLADE ADAPTER DEVICE, AND WINDSCREEN WIPER COMPRISING THE WIPER BLADE
DISPOSITIF ADAPTATEUR DE BALAI D'ESSUIE-GLACE, BALAI D'ESSUIE-GLACE COMPRENANT LE DISPOSITIF ADAPTATEUR DE BALAI D'ESSUIE-GLACE, ET ESSUIE-GLACE COMPRENANT LE BALAI D'ESSUIE-GLACE

(30) Priorität: 07.11.2019 DE 102019217192
(43) Veröffentlichungstag der Anmeldung: 14.09.2022
(73) Patentinhaber: Robert Bosch GmbH, 70442 Stuttgart (DE)
(72) Erfinder: RAPP, Harald, 77815 Buehl (DE)
(86) Internationale Anmeldenummer: PCT/EP2020/076876
(87) Internationale Veröffentlichungsnummer: WO 2021/089234

(56) Entgegenhaltungen:
- EP-A1- 2 786 906
- WO-A1-2016/119974
- WO-A1-2016/165009
- WO-A1-2020/216561
- DE-A1- 102010 025 688
- DE-A1- 102013 209 196

## Beschreibung

### Stand der Technik

Es ist bereits eine Wischblattadaptervorrichtung mit zumindest einem Fluidkanal zur Leitung eines Fluids und mit zumindest einer Verbindungseinheit zu einer Verbindung des Fluidkanals mit einem Wischarm vorgeschlagen worden. DE-A-102010025688 offenbart den Oberbegriff des Anspruchs 1.

### Offenbarung der Erfindung

Die Erfindung geht aus von einer Wischblattadaptervorrichtung mit zumindest einem Fluidkanal zur Leitung eines Fluids und mit zumindest einer Verbindungseinheit zu einer, insbesondere fluidtechnischen, Verbindung des Fluidkanals mit einem Wischarm, insbesondere zumindest einem Fluidleitungselement des Wischarms.

Es wird vorgeschlagen, dass die Wischblattadaptervorrichtung zumindest ein Ventilelement umfasst, das dazu vorgesehen ist, die fluidtechnische Verbindung des Fluidkanals mit dem Wischarm, insbesondere dem Fluidleitungselement, verschließbar auszubilden. Unter "vorgesehen" soll insbesondere speziell ausgelegt und/oder speziell ausgestattet verstanden werden. Darunter, dass ein Objekt, insbesondere das Ventilelement, zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist das Ventilelement zumindest teilweise an oder in dem Fluidkanal angeordnet. Vorzugsweise ist die Verbindungseinheit derart ausgebildet, dass die, insbesondere fluidtechnische, Verbindung des Fluidkanals mit dem Wischarm, insbesondere dem Fluidleitungselement, insbesondere werkzeuglos, trennbar und/oder wiederverbindbar ausgebildet ist. Vorzugsweise weist das Ventilelement zumindest einen geschlossenen Zustand und zumindest einen geöffneten Zustand auf. Insbesondere ist das Ventilelement in dem geöffneten Zustand des Ventilelements zumindest größtenteils außerhalb des Fluidkanals angeordnet. Darunter, dass ein Objekt, insbesondere das Ventilelement, "zumindest größtenteils" innerhalb oder außerhalb eines anderen Objekts, insbesondere des Fluidkanals, angeordnet ist, soll insbesondere verstanden werden, dass mindestens 50%, vorzugsweise mindestens 60% und besonders bevorzugt mindestens 70%, eines Volumens des Objekts innerhalb beziehungsweise außerhalb eines Volumens des anderen Objekts angeordnet ist. Insbesondere ist in dem geschlossenen Zustand des Ventilelements zumindest eine Querschnittsfläche des Fluidkanals in zumindest einer Schnittebene des Fluidkanals zumindest im Wesentlichen vollständig von dem Ventilelement verschlossen. Unter "im Wesentlichen vollständig verschlossen" soll insbesondere verstanden werden, dass eine Öffnung oder ein Volumen, insbesondere die Querschnittsfläche des Fluidkanals, von einem Element, insbesondere dem Ventilelement, insbesondere in zumindest einer Projektionsebene, zu insbesondere mindestens 95%, vorzugsweise mindestens 98% und besonders bevorzugt mindestens 99%, verdeckt ist. Bevorzugt verschließt das Ventilelement den Fluidkanal in dem geschlossenen Zustand des Ventilelements vollständig, insbesondere wasserdicht. Vorzugsweise ist das Ventilelement dazu vorgesehen, bei einer Betätigung eines Betätigungselements eines Scheibenwischers, insbesondere zu einer Reinigung einer Scheibe, den Fluidkanal zu öffnen, wobei das Fluid durch den Wischarm, insbesondere das Fluidleitungselement, und die Verbindungseinheit in den Fluidkanal geleitet wird. Bevorzugt ist die Wischblattadaptervorrichtung dazu vorgesehen, das Fluid über den Fluidkanal an zumindest eine Düse und/oder einen Auslass eines Wischblatts zu leiten. Vorzugsweise weist die Wischblattadaptervorrichtung zumindest einen Grundkörper auf, der den Fluidkanal zumindest größtenteils begrenzt. Bevorzugt bildet der Grundkörper die Verbindungseinheit aus. Insbesondere ist die Wischblattadaptervorrichtung als Teil des Wischblatts ausgebildet.

Vorzugsweise ist das Ventilelement in zumindest einem Bereich des Ventilelements relativ zum Fluidkanal bewegbar ausgebildet und/oder beweglich an der Verbindungseinheit gelagert. Bevorzugt ist das Ventilelement dazu vorgesehen, den Fluidkanal zu einer Leitung des Fluids an das Wischblatt, insbesondere eine Wischleiste des Wischblatts, zumindest zeitweise zu öffnen, insbesondere zu einem Wischvorgang des Scheibenwischers. Insbesondere ist das Ventilelement selbstschließend ausgebildet, wobei insbesondere in dem geöffneten Zustand zumindest teilweise zumindest eine Schließkraft, insbesondere eine Federkraft, eine Magnetkraft oder dergleichen, zu einer Überführung des Ventilelements in den geschlossenen Zustand auf das Ventilelement wirkt. Bevorzugt ist das Ventilelement dazu vorgesehen, in dem geöffneten Zustand, insbesondere permanent, mit einer Öffnungskraft beaufschlagt zu werden, die insbesondere der Schließkraft zu einem Beibehalten des geöffneten Zustands entgegenwirkt. Es ist denkbar, dass das Ventilelement dazu vorgesehen ist, von dem Fluid und/oder von einem, insbesondere zumindest teilweise an dem Ventilelement angeordneten, Aktuierungselement der Verbindungseinheit mit der Öffnungskraft beaufschlagt zu werden. Insbesondere ist das Aktuierungselement beispielsweise als ein Piezo-Element, als ein Linearaktuator, als ein Elektromagnet oder dergleichen ausgebildet. Beispielsweise ist das Ventilelement in zumindest einem Bereich des Ventilelements als eine federbelastete Kugel ausgebildet, die an dem und/oder innerhalb des Fluidkanals angeordnet ist und dazu vorgesehen ist, den Fluidkanal in dem geschlossenen Zustand zu verschließen. Insbesondere ist das zumindest teilweise als federbelastete Kugel ausgebildete Ventilelement dazu vorgesehen, bei einem Übergang in den geöffneten Zustand zu einer Öffnung des Fluidkanals gegen eine Federkraft bewegt zu werden. Vorzugsweise ist der Fluidkanal derart ausgebildet und/oder das Ventilelement derart angeordnet, dass die federbelastete Kugel in dem geschlossenen Zustand des Ventilelements derart angeordnet ist, dass das Fluid zumindest im Wesentlichen ungehindert durch den von der Verbindungseinheit begrenzten Fluidkanal, insbesondere von dem Fluidleitungselement zu dem Wischblatt, geleitet wird. Beispielsweise ist die federbelastete Kugel in dem geschlossenen Zustand in einem Randbereich des Fluidkanals und/oder an einer den Fluidkanal begrenzenden Innenfläche der Verbindungseinheit, insbesondere des Grundkörpers, angeordnet. In einer anderen beispielhaften Ausgestaltung des Ventilelements ist das Ventilelement in zumindest einem Bereich des Ventilelements als ein flexibles Element, beispielsweise eine Membran, ein Schlauch und/oder eine, insbesondere gasgefüllte, Gummi-Kugel, ausgebildet, wobei das Ventilelement dazu vorgesehen ist, bei einem Übergang in den geöffneten Zustand zu einer Öffnung des Fluidkanals elastisch verformt zu werden. Alternativ oder zusätzlich ist denkbar, dass das Ventilelement zumindest teilweise, insbesondere relativ zu der Querschnittsfläche des Fluidkanals, schiebbar und/oder klappbar ausgebildet ist.

Besonders bevorzugt ist das Ventilelement dazu vorgesehen, den Fluidkanal in Abhängigkeit von einer Zustandskenngröße des Fluids, insbesondere eines Fluids, das innerhalb eines an das Ventilelement angrenzenden Nahbereichs des Fluidkanals angeordnet ist, insbesondere wasserdicht, zu verschließen. Vorzugsweise ist die zumindest eine Zustandskenngröße des Fluids als ein Druck, als ein Volumenstrom, als eine Temperatur, als ein Anteil an Fremdkörpern im Fluid oder dergleichen ausgebildet. Insbesondere erstreckt sich der an das Ventilelement angrenzende Nahbereich des Fluidkanals innerhalb des Fluidkanals in einem maximalen Abstand von insbesondere höchstens 3 cm, vorzugsweise höchstens 2 cm und besonders bevorzugt höchstens 1 cm, um das Ventilelement. Bevorzugt ist das Ventilelement dazu vorgesehen, bei einer Überschreitung zumindest eines Grenzwerts der Zustandskenngröße des innerhalb des Nahbereichs angeordneten Fluids mechanisch auszulösen, wobei insbesondere der Fluidkanal bei einem Auslösen des Ventilelements, insbesondere wasserdicht, verschlossen wird. Beispielsweise in einer Ausgestaltung der Zustandskenngröße des Fluids als Druck, ist es denkbar, dass das Ventilelement direkt über das Fluid, insbesondere über eine durch den Druck des Fluids auf das Ventilelement ausgeübte Kraft, in den geschlossenen Zustand überführt wird. Besonders bevorzugt ist das Ventilelement dazu vorgesehen, den Fluidkanal in Abhängigkeit von der Zustandskenngröße des Fluids, insbesondere nach einem Absinken der Zustandskenngröße des Fluids unter den Grenzwert, zu öffnen oder freizugeben. Vorzugsweise ist der Fluidkanal als zumindest eine kanalartige Ausnehmung und/oder zumindest ein von einem rohrartigen Element begrenzter Kanal ausgebildet, wobei die kanalartige Ausnehmung und/oder der von einem rohrartigen Element begrenzte Kanal zur Führung des Fluids vorgesehen ist.

Durch die erfindungsgemäße Ausgestaltung der Wischblattadaptervorrichtung kann eine vorteilhaft schnelle Reaktionszeit für einen Start eines Wischvorgangs erreicht werden, insbesondere da ein Weg, den das Fluid von dem Ventilelement zu einer Ausgabeöffnung, insbesondere an der Wischblattadaptervorrichtung und/oder einer Wischleiste des Wischblatts, zurücklegen muss, vorteilhaft geringgehalten werden kann. Es kann eine vorteilhaft wischblattseitige Anordnung des Ventilelements ermöglicht werden.

Des Weiteren wird vorgeschlagen, dass die Verbindungseinheit zumindest eine wischarmseitige Einlassöffnung des Fluidkanals umfasst, die zu einer Verbindung mit dem Fluidleitungselement vorgesehen ist, wobei das Ventilelement in einem Nahbereich der wischarmseitigen Einlassöffnung angeordnet ist. Es kann eine vorteilhaft einfache und schnelle Wartung der Wischblattadaptervorrichtung, insbesondere des Ventilelements, ermöglicht werden, insbesondere da das Ventilelement leicht zugänglich angeordnet werden kann. Es kann ein Gewicht des im Wischblatt befindlichen Fluids, insbesondere in einem geschlossenen Zustand des Ventilelements, vorteilhaft gering gehalten werden. Dadurch kann eine vorteilhaft hohe Beweglichkeit des Wischblatts und/oder ein vorteilhaft energiesparender Antrieb des Wischblatts über den Wischarm erreicht werden. Insbesondere ist die wischarmseitige Einlassöffnung als eine Querschnittsfläche des Fluidkanals ausgebildet, die an einem Ende des Fluidkanals angeordnet ist und noch vollständig von der Verbindungseinheit, insbesondere dem Grundkörper, begrenzt ist. Vorzugsweise ist die wischarmseitige Einlassöffnung dazu vorgesehen, das Fluid über das Fluidleitungselement des Wischarms aufzunehmen. Bevorzugt ist die wischarmseitige Einlassöffnung dazu vorgesehen, zur Verbindung mit dem Fluidleitungselement das Fluidleitungselement zumindest teilweise aufzunehmen oder in das Fluidleitungselement eingeschoben zu werden. Darunter, dass "das Ventilelement in einem Nahbereich der wischarmseitigen Einlassöffnung angeordnet ist", soll insbesondere verstanden werden, dass ein minimaler Abstand des Ventilelements und der wischarmseitigen Einlassöffnung, insbesondere entlang des Fluidkanals betrachtet, kleiner ist als ein minimaler Abstand des Ventilelements und zumindest einer, insbesondere aller, Auslassöffnungen des Fluidkanals. Besonders bevorzugt beträgt der minimale Abstand des Ventilelements zur wischarmseitigen Einlassöffnung, insbesondere entlang des Fluidkanals betrachtet, insbesondere höchstens 4 cm, vorzugsweise höchstens 3 cm, bevorzugt höchstens 2 cm und besonders bevorzugt höchstens 1 cm. Vorzugsweise ist das Ventilelement beabstandet von der wischarmseitigen Einlassöffnung ausgebildet.

Zudem wird vorgeschlagen, dass der Fluidkanal zumindest zwei, insbesondere der vorher genannten, Auslassöffnungen aufweist, wobei die Auslassöffnungen über zumindest eine Verzweigung des Fluidkanals, insbesondere fluidtechnisch, mit der wischarmseitigen Einlassöffnung verbunden sind und wobei das Ventilelement fluidtechnisch betrachtet zwischen der wischarmseitigen Einlassöffnung und der Verzweigung angeordnet ist. Es kann eine vorteilhaft geringe Anzahl an Ventilelementen ermöglicht werden, insbesondere da mehrere Auslassöffnungen über ein Ventilelement geschlossen beziehungsweise geöffnet werden können. Insbesondere ist die Auslassöffnung als Teil einer Düse zur Ausgabe des Fluids und/oder als Teil eines zu einer Verbindung mit einer Wischleiste des Wischblatts vorgesehenen Anschlussstutzens ausgebildet. Vorzugsweise ist das Ventilelement beabstandet von der Verzweigung angeordnet. Es ist denkbar, dass die Wischblattadaptervorrichtung, insbesondere der Fluidkanal, eine Vielzahl von Auslassöffnungen aufweist. Zusätzlich ist denkbar, dass die wischarmseitige Einlassöffnung über die Verzweigung, insbesondere fluidtechnisch, mit mehr als einer Auslassöffnung verbunden ist.

Nach der Erfindung wird vorgeschlagen, dass die Verbindungseinheit zumindest einen Anschlussstutzen umfasst, der zu einer kraft- und/oder formschlüssigen Verbindung mit dem Fluidleitungselement vorgesehen ist, wobei das Ventilelement zumindest teilweise, insbesondere zumindest größtenteils, innerhalb des Anschlussstutzens angeordnet ist. Das Ventilelement kann vorteilhaft zugänglich angeordnet werden. Dadurch können vorteilhaft geringe Wartungskosten ermöglicht werden, insbesondere bei einem Austausch oder einer Reparatur des Ventils. Es können vorteilhaft geringe Herstellungskosten ermöglicht werden, insbesondere da das Ventilelement vorteilhaft einfach und schnell am oder im Fluidkanal angeordnet werden kann. Es kann eine vorteilhaft kompakte Ausgestaltung der Wischblattadaptervorrichtung erreicht werden, insbesondere in eine senkrecht zu einer Scheibe, auf der das Wischblatt bewegt werden soll, ausgerichtete Richtung. Insbesondere umfasst der Anschlussstutzen die wischarmseitige Einlassöffnung des Fluidkanals. Vorzugsweise begrenzt der Anschlussstutzen den Fluidkanal, insbesondere in einem Bereich der wischarmseitigen Einlassöffnung, zumindest teilweise. Bevorzugt ist das Ventilelement zumindest teilweise, insbesondere zumindest größtenteils, innerhalb des vom Anschlussstutzen begrenzten Bereichs des Fluidkanals angeordnet. Unter einer "kraft- und/oder formschlüssigen Verbindung" soll insbesondere eine lösbare Verbindung verstanden werden, wobei eine Haltekraft zwischen zwei Bauteilen, insbesondere dem Anschlussstutzen und dem Fluidleitungselement, vorzugsweise durch einen geometrischen Eingriff der Bauteile ineinander und/oder eine Reibkraft zwischen den Bauteilen übertragen wird.

Nach der Erfindung wird vorgeschlagen, dass das Ventilelement zumindest eine Sperr- und/oder Durchlassrichtung aufweist, wobei das Ventilelement derart angeordnet ist, dass die Sperr- und/oder Durchlassrichtung zumindest im Wesentlichen parallel zu einer Verbindungsrichtung der Verbindungseinheit ausgerichtet ist. Es kann eine vorteilhaft gerichtete Kraftübertragung der vom Fluid auf das Ventilelement wirkenden Kraft auf die Wischblattadaptervorrichtung erreicht werden. Es kann eine vorteilhaft einfache Befestigung des Fluidleitungselements ermöglicht werden, insbesondere da eine Berücksichtigung von zur Verbindungsrichtung radialen oder um die Verbindungsrichtung ausgerichteten Kräften des Fluids, welche auf das Ventilelement wirken, entfallen kann. Vorzugsweise erstrecken/erstreckt sich die Sperr- und/oder Durchlassrichtung und/oder die Verbindungsrichtung entlang einer Achse. Unter "im Wesentlichen parallel" soll insbesondere eine Ausrichtung einer Geraden, einer Ebene oder einer Richtung, insbesondere der Sperr- und/oder Durchlassrichtung, relativ zu einer anderen Geraden, einer anderen Ebene oder einer Bezugsrichtung, insbesondere der Verbindungsrichtung, verstanden werden, wobei die Gerade, die Ebene oder die Richtung gegenüber der anderen Geraden, der anderen Ebene oder der Bezugsrichtung, insbesondere in einer Projektionsebene betrachtet, eine Abweichung insbesondere kleiner als 8°, vorteilhaft kleiner als 5° und besonders vorteilhaft kleiner als 2° aufweist. Vorzugsweise ist die Verbindungseinheit, insbesondere der Anschlussstutzen, dazu vorgesehen, über eine Bewegung in Verbindungsrichtung mit dem Fluidleitungselement verbunden zu werden. Bevorzugt ist das Ventilelement dazu vorgesehen, den Fluidkanal gegenüber einem in die Sperr- und/oder Durchlassrichtung strömenden Fluid verschließbar auszubilden. Insbesondere weist die Wischblattadaptervorrichtung, insbesondere der Grundkörper und/oder der Fluidkanal, zumindest eine Haupterstreckungsachse auf, wobei das Ventilelement derart angeordnet ist, dass die Sperr- und/oder Durchlassrichtung zumindest im Wesentlichen senkrecht zur Haupterstreckungsachse ausgerichtet ist. Unter einer "Haupterstreckungsachse" eines Objekts, insbesondere der Wischblattadaptervorrichtung des Grundkörpers und/oder des Fluidkanals, soll insbesondere eine Achse verstanden werden, welche parallel zu einer längsten Kante eines kleinsten geometrischen Quaders verläuft, welcher das Objekt gerade noch vollständig umschließt. Unter "im Wesentlichen senkrecht" soll insbesondere eine Ausrichtung einer Geraden, einer Ebene oder einer Richtung, insbesondere der Sperr- und/oder Durchlassrichtung und der Verbindungsrichtung, relativ zu einer anderen Geraden, einer anderen Ebene oder einer Bezugsrichtung, insbesondere der Haupterstreckungsachse, verstanden werden, wobei die Gerade, die Ebene oder die Richtung und die andere Gerade, die andere Ebene oder die Bezugsrichtung, insbesondere in einer Projektionsebene betrachtet, zusammen einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise weist die wischarmseitige Einlassöffnung eine Einlassrichtung und/oder eine Mittelachse auf, wobei das Ventilelement derart angeordnet ist, dass die Sperr- und/oder Durchlassrichtung zumindest im Wesentlichen parallel zur Mittelachse und/oder zur Einlassrichtung ausgerichtet ist. Insbesondere weisen die Auslassöffnungen jeweils zumindest eine Auslassrichtung auf, wobei das Ventilelement derart angeordnet ist, dass die Sperr- und/oder Durchlassrichtung zumindest schräg zu den Auslassrichtungen ausgerichtet ist.

Zudem wird vorgeschlagen, dass das Ventilelement zumindest eine Sperr- und/oder Durchlassrichtung aufweist, wobei das Ventilelement derart angeordnet ist, dass der Fluidkanal in einem minimalen Abstand in und/oder entgegen die Sperr- und/oder Durchlassrichtung von mindestens 0,5 cm, vorzugsweise mindestens 1 cm und besonders bevorzugt mindestens 1,5 cm, von dem Ventilelement zumindest im Wesentlichen geradlinig ausgebildet ist. Es kann eine vorteilhaft laminare Strömung des Fluids in einem Bereich um das Ventilelement ermöglicht werden. Es kann ein vorteilhaft geringer Strömungswiderstand in einem Bereich des Ventilelements erreicht werden. Dadurch kann eine vorteilhaft schnelle Reaktionszeit für einen Start eines Wischvorgangs erreicht werden. Unter "im Wesentlichen geradlinig" soll insbesondere verstanden werden, dass ein Objekt, insbesondere der Fluidkanal, derart ausgebildet ist, dass das Objekt, in zumindest einer zumindest im Wesentlichen senkrecht zu einer Haupterstreckungsachse des Objekts ausgerichteten Schnittebene des Objekts, begrenzende Außenflächen entlang der Haupterstreckungsachse sich zumindest im Wesentlichen parallel zur Haupterstreckungsachse erstrecken. Besonders bevorzugt beträgt ein minimaler Abstand des Ventilelements zu der Verzweigung, insbesondere entlang des Fluidkanals betrachtet, insbesondere mindestens 0,5 cm, vorzugsweise mindestens 1 cm, und besonders bevorzugt mindestens 1,5 cm. Vorzugsweise ist der Fluidkanal in einem Bereich zwischen dem Ventilelement und der Verzweigung zumindest im Wesentlichen geradlinig ausgebildet.

Ferner wird vorgeschlagen, dass das Ventilelement an der Verbindungseinheit befestigt ist und/oder einstückig mit der Verbindungseinheit ausgebildet ist, wobei das Ventilelement zusammen mit einem Wischblatt wechselbar ausgebildet ist. Es können vorteilhaft geringe Wartungskosten ermöglicht werden, insbesondere da das Ventilelement mit dem Wischblattadapter, vorzugsweise unabhängig von dem Wischarm, als austauschbares und/oder wiederverwendbares Bauteil ausgebildet werden kann. Unter "einstückig" soll insbesondere stoffschlüssig verbunden, wie beispielsweise durch einen Schweißprozess und/oder einen Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorzugsweise ist das Ventilelement über eine stoffschlüssige Verbindung an der Verbindungseinheit befestigt. Vorzugsweise ist das Ventilelement, insbesondere hinsichtlich einer Position des Ventilelements relativ zur Verbindungseinheit, unabhängig von einem Verbindungszustand der Verbindungseinheit mit dem Fluidleitungselement ausgebildet.

Des Weiteren wird vorgeschlagen, dass die Wischblattadaptervorrichtung zumindest ein weiteres Ventilelement umfasst, wobei die Verbindungseinheit zumindest eine, insbesondere getrennt von der wischarmseitigen Einlassöffnung ausgebildete, weitere wischarmseitige Einlassöffnung umfasst und wobei das weitere Ventilelement in einem Nahbereich der weiteren wischarmseitigen Einlassöffnung angeordnet ist. Es kann eine vorteilhaft hohe Funktionalität und Flexibilität der Wischblattadaptervorrichtung ermöglicht werden, insbesondere hinsichtlich einer Ausgestaltung einer Wischleiste des Wischblatts und/oder des Wischarms, insbesondere eines Fluidleitungselements des Wischarms. Es können mehrere Fluidkanäle eines Wischblatts separat voneinander verschließbar ausgebildet werden. Vorzugsweise ist das weitere Ventilelement zumindest im Wesentlichen baugleich zu dem Ventilelement ausgebildet. Darunter, dass zwei Bauteile, insbesondere das Ventilelement und das weitere Ventilelement "im Wesentlichen baugleich" ausgebildet sind, soll insbesondere verstanden werden, dass die zwei Bauteile in zumindest zwei senkrecht zueinander ausgerichteten Richtungen jeweils eine gleiche maximale Erstreckung aufweisen. Vorzugsweise ist das weitere Ventilelement in eine Versatzrichtung, die insbesondere zumindest im Wesentlichen senkrecht zur Haupterstreckungsachse und zumindest im Wesentlichen senkrecht zur Verbindungsrichtung ausgerichtet ist, versetzt zu dem Ventilelement angeordnet, wobei insbesondere eine weitere Sperr- und/oder Durchlassrichtung des weiteren Ventilelements zumindest im Wesentlichen parallel zur Sperr- und/oder Durchlassrichtung des Ventilelements ausgerichtet ist. Insbesondere umfasst die Wischblattadaptervorrichtung zumindest einen weiteren Fluidkanal, der insbesondere fluidtechnisch getrennt von dem Fluidkanal ausgebildet ist. Bevorzugt ist die weitere wischarmseitige Einlassöffnung als Teil des weiteren Fluidkanals ausgebildet. Insbesondere weist der weitere Fluidkanal eine Grundform auf, die zumindest im Wesentlichen einer Grundform des Fluidkanals entspricht, wobei der weitere Fluidkanal in Versatzrichtung versetzt zu dem Fluidkanal angeordnet ist. Bevorzugt umfasst die Verbindungseinheit zumindest einen weiteren Anschlussstutzen, der den weiteren Fluidkanal zumindest teilweise begrenzt, wobei das weitere Ventilelement zumindest teilweise, insbesondere zumindest größtenteils, innerhalb des Anschlussstutzens beziehungsweise eines vom Anschlussstutzen begrenzten Bereichs des weiteren Fluidkanals angeordnet ist. Besonders bevorzugt ist das weitere Ventilelement dazu vorgesehen, eine fluidtechnische Verbindung des weiteren Fluidkanals mit dem Wischarm, insbesondere dem Fluidleitungselement oder einem weiteren Fluidleitungselement des Wischarms, verschließbar auszubilden.

Nach der Erfindung wird vorgeschlagen, dass das Ventilelement mechanisch, pneumatisch und/oder hydraulisch ansteuerbar ausgebildet ist. Es kann eine vorteilhaft individuelle Steuerung des Ventilelements ermöglicht werden. Es kann vorteilhaft ein Betrieb des Ventilelements unabhängig von der Zustandskenngröße des Fluids ermöglicht werden, insbesondere zu einer Reinigung des Fluidkanals bei niedrigerem Druck, zu einer Wartung der Wischarmvorrichtung, zu einer automatischen Diagnose des Ventilelements oder dergleichen Insbesondere ist das Ventilelement dazu vorgesehen, bei einer Ansteuerung in den geschlossenen oder den geöffneten Zustand des Ventilelements zu wechseln. Es ist denkbar, dass die Wischblattadaptervorrichtung zumindest eine Kommunikations- und/oder Leitungseinheit umfasst, die dazu vorgesehen ist, das Ventilelement mit einer Steuer- und/oder Regeleinheit der Wischblattadaptervorrichtung oder des Scheibenwischers zu verbinden. Vorzugsweise umfasst die Kommunikations- und/oder Leitungseinheit zumindest ein Kommunikations- und/oder Leitungselement, das an dem Ventilelement angeordnet ist. Beispielsweise verläuft das Kommunikations- und/oder Leitungselement von dem Ventilelement, insbesondere entlang des Wischarms und/oder des Fluidleitungselements, bis zu der Steuer- und/oder Regeleinheit. Vorzugsweise ist das Kommunikations- und/oder Leitungselement zu einer Übertragung zumindest eines optischen, haptischen und/oder akustischen Signals von der Steuer- und/oder Regeleinheit an das Ventilelement, insbesondere zu einer Steuerung und/oder Regelung des Ventilelements, vorgesehen. Insbesondere in einer Ausgestaltung der Wischblattadaptervorrichtung, bei der das Ventilelement elektrisch und/oder elektronisch ansteuerbar ist, ist denkbar, dass das Kommunikations- und/oder Leitungselement dazu vorgesehen ist, Steuersignale der Steuer- und/oder Regeleinheit, insbesondere zur Steuerung und/oder Regelung des Ventilelements, über eine drahtlose Verbindung, beispielsweise eine Funkverbindung und/oder induktionsbasierte Verbindung, an das Ventilelement zu übertragen. Insbesondere ist das Ventilelement dazu vorgesehen, in Abhängigkeit von den übertragenen Steuerbefehlen in den geschlossenen oder den geöffneten Zustand des Ventilelements zu wechseln. Insbesondere in einer Ausgestaltung der Wischblattadaptervorrichtung, insbesondere der Verbindungseinheit, mit dem Aktuierungselement, ist die Steuer- und/oder Regeleinheit vorzugsweise dazu vorgesehen, bevorzugt über die Kommunikations- und/oder Leitungseinheit, insbesondere über das Kommunikations- und/oder Leitungselement, das Aktuierungselement zu einem Öffnen des Ventilelements anzusteuern. Bevorzugterweise ist das Aktuierungselement dazu vorgesehen, bei einer Ansteuerung durch die Steuer- und/oder Regeleinheit das Ventilelement zu einem Öffnen des Fluidkanals mit der Öffnungskraft zu beaufschlagen.

Außerdem wird ein Wischblatt mit zumindest einer erfindungsgemäßen Wischblattadaptervorrichtung vorgeschlagen.

Durch die erfindungsgemäße Ausgestaltung des Wischblatts kann eine vorteilhaft schnelle Reaktionszeit für einen Start eines Wischvorgangs erreicht werden, insbesondere da ein Weg, den das Fluid von dem Ventilelement zu einer Ausgabeöffnung, insbesondere an der Wischblattadaptervorrichtung und/oder einer Wischleiste des Wischblatts, zurücklegen muss, vorteilhaft geringgehalten werden kann.

Zudem wird ein Scheibenwischer mit zumindest einem Wischarm und mit zumindest einem erfindungsgemäßen Wischblatt vorgeschlagen.

Durch die erfindungsgemäße Ausgestaltung des Scheibenwischers kann eine vorteilhaft schnelle Reaktionszeit für einen Start eines Wischvorgangs erreicht werden, insbesondere da ein Weg, den das Fluid von dem Ventilelement zu einer Ausgabeöffnung, insbesondere an der Wischblattadaptervorrichtung und/oder einer Wischleiste des Wischblatts, zurücklegen muss, vorteilhaft geringgehalten werden kann. Es kann eine vorteilhaft wischblattseitige Anordnung des Ventilelements ermöglicht werden.

Die erfindungsgemäße Wischblattadaptervorrichtung, das erfindungsgemäße Wischblatt und/oder der erfindungsgemäße Scheibenwischer sollen/soll hierbei nicht auf die oben beschriebene Anwendung und Ausführungsform beschränkt sein. Insbesondere können/kann die erfindungsgemäße Wischblattadaptervorrichtung, das erfindungsgemäße Wischblatt und/oder der erfindungsgemäße Scheibenwischer zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Scheibenwischers mit einem Wischarm und einem erfindungsgemäßen Wischblatt, welches eine erfindungsgemäße Wischblattadaptervorrichtung aufweist,
- Fig. 2: eine Detailansicht des erfindungsgemäßen Scheibenwischers in einem Verbindungsbereich des Wischarms mit dem erfindungsgemäßen Wischblatt,
- Fig. 3: eine schematische Seitenansicht der erfindungsgemäßen Wischblattadaptervorrichtung,
- Fig. 4: eine schematische Darstellung eines Fluidleitungselements des Wischarms und der erfindungsgemäßen Wischblattadaptervorrichtung des erfindungsgemäßen Wischblatts in einem demontierten Zustand von Ventilelementen der Wischblattadaptervorrichtung und
- Fig. 5: eine schematische Darstellung des Fluidleitungselements des Wischarms und der erfindungsgemäßen Wischblattadaptervorrichtung des erfindungsgemäßen Wischblatts in einem montierten Zustand der Ventilelemente der Wischblattadaptervorrichtung.

### Beschreibung des Ausführungsbeispiels

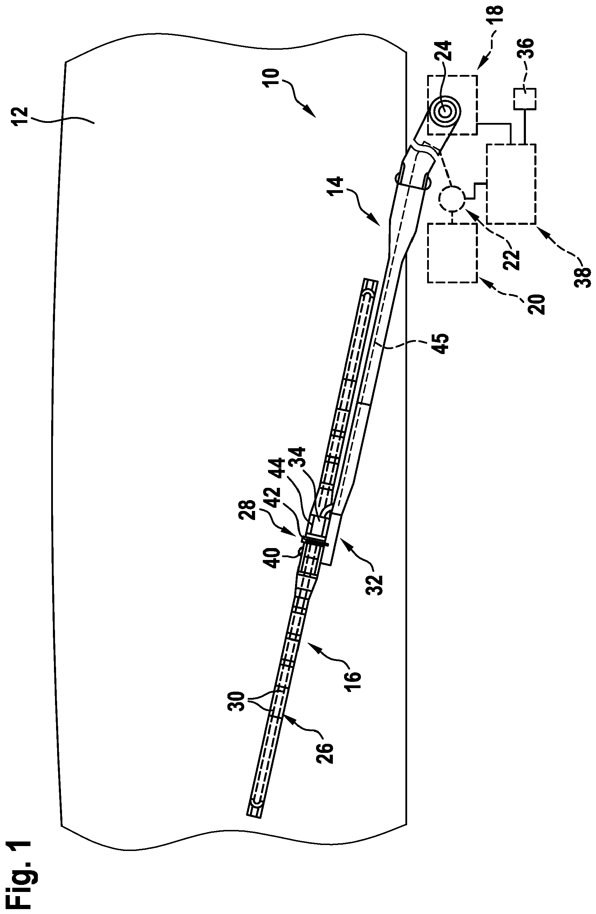

In Figur 1 ist ein Scheibenwischer 10 in einem montierten Zustand an einer Scheibe 12 gezeigt. Insbesondere ist die Scheibe 12 als Frontscheibe eines Fahrzeugs ausgebildet, welches in der Figur nicht gezeigt ist. Es ist aber auch denkbar, dass der Scheibenwischer 10 an einer Scheibe 12 eines stationären Objekts, wie beispielsweise eines Gebäudes, oder eines anderen Fortbewegungsmittels angeordnet ist. Der Scheibenwischer 10 umfasst einen Wischarm 14, ein Wischblatt 16, eine Antriebseinheit 18, einen Fluidbehälter 20 und eine Pumpeinheit 22. Vorzugsweise weist die Antriebseinheit 18 eine über ein Antriebselement der Antriebseinheit 18, welches insbesondere in der Figur 1 nicht gezeigt ist, angetriebene Antriebswelle 24 auf, wobei insbesondere der Wischarm 14 an der Antriebswelle 24 befestigt ist und über die Antriebswelle 24 entlang der Scheibe 12 bewegbar ist. Das Wischblatt 16 umfasst eine Wischleiste 26 und eine Wischblattadaptervorrichtung 28 zu einer Verbindung des Wischblatts 16 mit dem Wischarm 14. Die Wischleiste 26 umfasst zwei Fluidleitelemente 30, die zu einer Leitung des Fluids von der Wischblattadaptervorrichtung 28 zu einer von einer Vielzahl an Auslassöffnungen des Wischblatts 16 vorgesehen sind, welche in Figur 1 nicht gezeigt sind. Der Wischarm 14 umfasst einen Wischarmadapter 32 und ein Fluidleitungselement 34 zu einer fluidtechnischen Verbindung des Fluidbehälters 20 mit dem Wischblatt 16, insbesondere der Wischblattadaptervorrichtung 28. Das Wischblatt 16 ist über die Wischblattadaptervorrichtung 28 an dem Wischarm 14, insbesondere dem Wischarmadapter 32, befestigbar. Insbesondere ist das Wischblatt 16 über die Wischblattadaptervorrichtung 28 und den Wischarmadapter 32 in zumindest einem Betriebszustand des Scheibenwischers 10, insbesondere zu einer Montage oder einer Demontage des Wischblatts 16, relativ zum Wischarm 14 drehbar gelagert. Der Scheibenwischer 10 umfasst ein, insbesondere als Wischerhebel ausgebildetes, Betätigungselement 36 zu einer Steuerung und/oder Regelung zumindest einer Funktion des Scheibenwischers 10 durch einen Benutzer. Der Scheibenwischer 10 umfasst eine Steuer- und/oder Regeleinheit 38, die zumindest zu einer Steuerung und/oder Regelung der Pumpeinheit 22 und/oder der Antriebseinheit 18 vorgesehen ist.

Der Wischarm 14 weist ein, insbesondere als Lagerbolzen ausgebildetes, Lagerelement 40 und ein, insbesondere als Haltefinger ausgebildetes, Fixierungselement 42 auf. Das Fixierungselement 42 ist insbesondere dazu vorgesehen, das Wischblatt 16, insbesondere die Wischblattadaptervorrichtung 28, in zumindest einer Position relativ zum Wischarm 14, insbesondere dem Wischarmadapter 32, zu fixieren. Vorzugsweise ist das Fixierungselement 42 dazu vorgesehen, die Wischblattadaptervorrichtung 28, insbesondere einen Grundkörper 44 der Wischblattadaptervorrichtung 28, in zumindest einem montierten Zustand des Wischblatts 16 zumindest teilweise zu umgreifen. Insbesondere ist das Wischblatt 16, insbesondere die Wischblattadaptervorrichtung 28, über das Lagerelement 40 des Wischarmadapters 32 beweglich, insbesondere schwenkbar, an dem Wischarmadapter 32 gelagert. Die Pumpeinheit 22 ist insbesondere dazu vorgesehen, das Fluid von dem Fluidbehälter 20 über den Wischarm 14, insbesondere über zwei Fluidleitelemente 45 des Wischarms 14 und das Fluidleitungselement 34, zu der Wischblattadaptervorrichtung 28 zu befördern. Bevorzugt ist die Wischblattadaptervorrichtung 28 dazu vorgesehen, das Fluid an die Wischleiste 26, insbesondere bis zu Endkappen der Wischleiste 26, zu leiten.

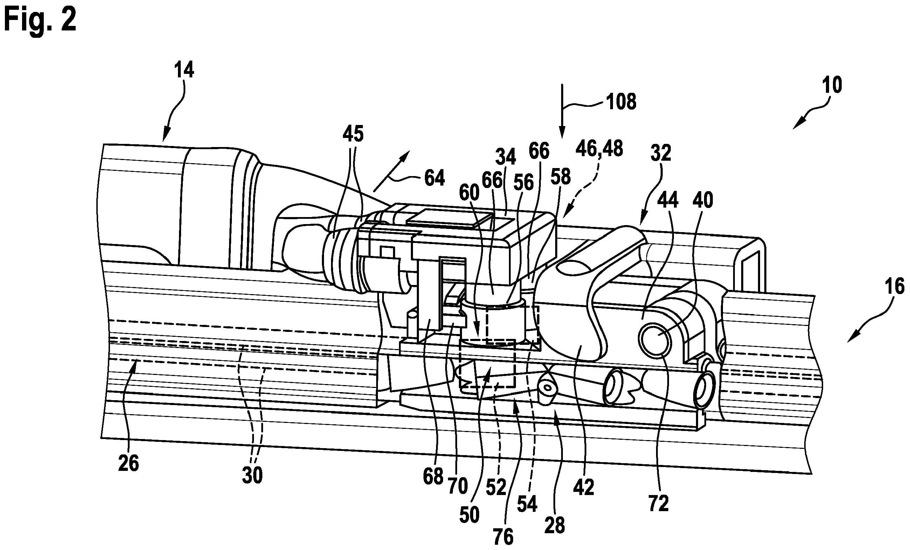

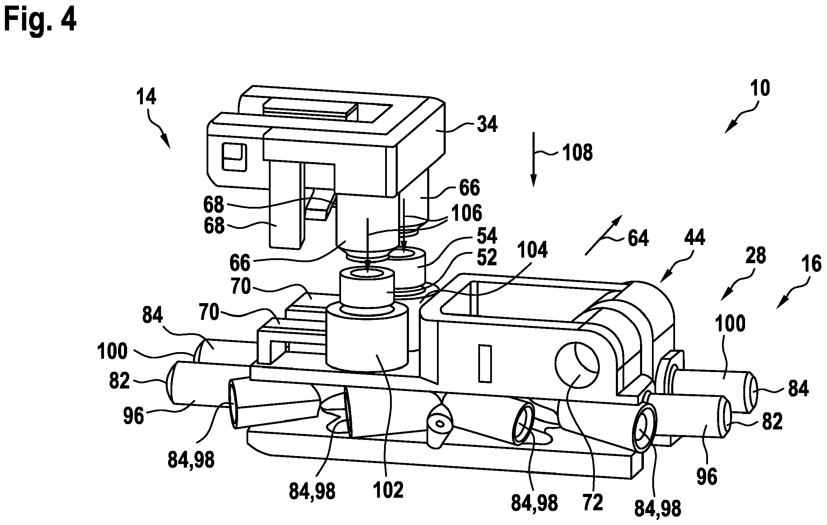

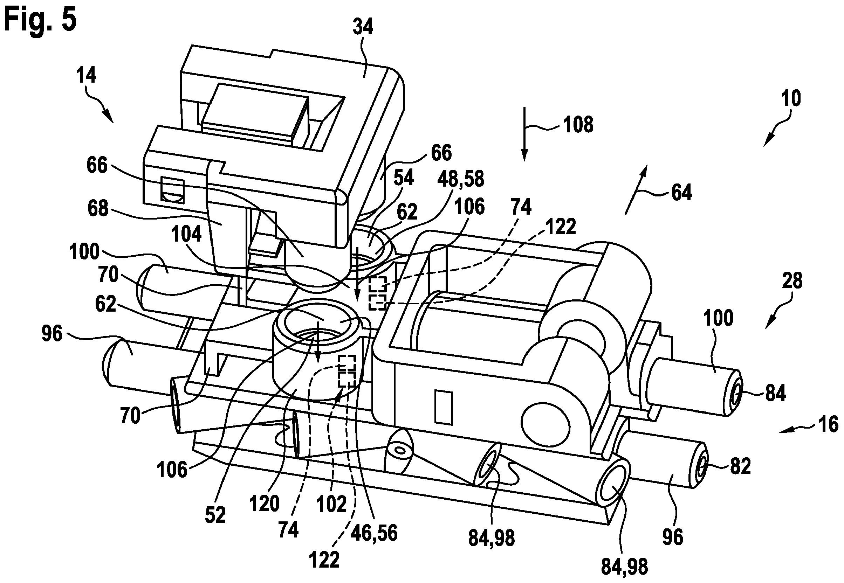

In Figur 2 ist eine Detailansicht des Wischblatts 16 in einem Bereich der Wischblattadaptervorrichtung 28 gezeigt. Die Wischblattadaptervorrichtung 28 umfasst zwei Fluidkanäle 46, 48, insbesondere einen Fluidkanal 46 und einen weiteren Fluidkanal 48, zur Leitung des Fluids und eine Verbindungseinheit 50 zu einer fluidtechnischen Verbindung der Fluidkanäle 46, 48 mit dem Wischarm 14, insbesondere dem Fluidleitungselement 34 des Wischarms 14 (siehe auch Figur 4 und Figur 5). Insbesondere sind die Verbindungseinheit 50 und das Fluidleitungselement 34 in der Figur 2 in einem verbundenen Zustand gezeigt. Die Wischblattadaptervorrichtung 28 umfasst zwei Ventilelemente 52, 54, insbesondere ein Ventilelement 52 und ein weiteres Ventilelement 54, die dazu vorgesehen sind, die fluidtechnische Verbindung der Fluidkanäle 46, 48 mit dem Wischarm 14, insbesondere dem Fluidleitungselement 34, verschließbar auszubilden. Die Verbindungseinheit 50 umfasst zwei wischarmseitige Einlassöffnungen 56, 58 der Fluidkanäle 46, 48, insbesondere eine wischarmseitige Einlassöffnung 56 des Fluidkanals 46 und eine weitere wischarmseitige Einlassöffnung 58 des weiteren Fluidkanals 48, die zu einer Verbindung mit dem Fluidleitungselement 34 vorgesehen sind, wobei das Ventilelement 52 in einem Nahbereich 60 der wischarmseitigen Einlassöffnung 56 angeordnet ist und wobei das weitere Ventilelement 54 in einem Nahbereich 60 der weiteren wischarmseitigen Einlassöffnung 58 angeordnet ist. Der Fluidkanal 46 ist fluidtechnisch getrennt von dem weiteren Fluidkanal 48 ausgebildet. Die weitere wischarmseitige Einlassöffnung 58 ist getrennt von der wischarmseitigen Einlassöffnung 56 ausgebildet. Die Einlassöffnungen 56, 58 weisen jeweils eine kreisförmige Querschnittsfläche 62 auf (siehe Figur 5). Die Einlassöffnungen 56, 58 sind zumindest im Wesentlichen parallel zueinander und in eine Versatzrichtung 64 versetzt zueinander angeordnet. Die Fluidkanäle 46, 48 werden durch den Grundkörper 44 der Wischblattadaptervorrichtung 28 begrenzt. Es sind jedoch auch andere Ausgestaltungen der Einlassöffnungen 56, 58 denkbar. Das Fluidleitungselement 34 des Wischarms 14 bildet zwei Fortsätze 66 aus, die zur fluidtechnischen Verbindung mit der Verbindungseinheit 50 zumindest teilweise in die Einlassöffnungen 56, 58 eingeschoben werden. Das Fluidleitungselement 34 bildet zwei Rastelemente 68 aus, welche dazu vorgesehen sind, zu einer Befestigung des Fluidleitungselements 34 an der Wischblattadaptervorrichtung 28 mit zwei Gegenrastelementen 70 der Verbindungseinheit 50 zusammenzuwirken. Es sind aber auch andere Ausgestaltungen einer Befestigungseinheit der Wischblattadaptervorrichtung 28, insbesondere der Rastelemente 68 und/oder der Gegenrastelemente 70, zur Befestigung des Fluidleitungselements 34 an der Wischblattadaptervorrichtung 28 denkbar. Das Fluidleitungselement 34 ist über die zwei Fluidleitelemente 45 des Wischarms 14 mit dem Fluidbehälter 20 verbunden. Der Grundkörper 44 begrenzt eine Lagerausnehmung 72, über die die Wischblattadaptervorrichtung 28 an dem Wischarmadapter 32, insbesondere dem Lagerelement 40 des Wischarmadapters 32, drehbar gelagert ist.

Die Ventilelemente 52, 54 sind in zumindest einem Bereich relativ zum Fluidkanal 46 beziehungsweise zu dem weiteren Fluidkanal 48 bewegbar ausgebildet und/oder beweglich an der Verbindungseinheit 50 gelagert. Die Ventilelemente 52, 54 sind dazu vorgesehen, den Fluidkanal 46 beziehungsweise den weiteren Fluidkanal 48 zu einer Leitung des Fluids an das Wischblatt 16, insbesondere die Wischleiste 26, zumindest zeitweise zu öffnen, insbesondere zu einem Wischvorgang des Scheibenwischers 10. Insbesondere sind die Ventilelemente 52, 54 selbstschließend ausgebildet, wobei insbesondere in dem geöffneten Zustand eines Ventilelements 52, 54 zumindest teilweise zumindest eine Schließkraft, insbesondere eine Federkraft, eine Magnetkraft oder dergleichen, zu einer Überführung des Ventilelements 52, 54 in den geschlossenen Zustand auf das Ventilelement 52, 54 wirkt. Die Ventilelemente 52, 54 sind dazu vorgesehen, in dem geöffneten Zustand, insbesondere permanent, mit einer Öffnungskraft beaufschlagt zu werden, die insbesondere der Schließkraft zu einem Beibehalten des geöffneten Zustands entgegenwirkt. Die Ventilelemente 52, 54 sind jeweils in zumindest einem Bereich der Ventilelemente 52, 54 als eine federbelastete Kugel ausgebildet, die an und/oder innerhalb des Fluidkanals 46 angeordnet ist und dazu vorgesehen ist, den Fluidkanal 46 in dem geschlossenen Zustand zu verschließen. Die Ventilelemente 52, 54 sind jeweils dazu vorgesehen, bei einem Übergang in den geöffneten Zustand zu einer Öffnung des Fluidkanals 46 beziehungsweise des weiteren Fluidkanals 48 gegen eine Federkraft bewegt zu werden. Die Fluidkanäle 46, 48 sind derart ausgebildet und die Ventilelemente 52, 54 derart angeordnet, dass die federbelastete Kugel in dem geschlossenen Zustand der Ventilelemente 52, 54 derart angeordnet ist, dass das Fluid zumindest im Wesentlichen ungehindert durch einen von der Verbindungseinheit 50 begrenzten Fluidkanal 46, insbesondere von dem Fluidleitelement 45 zu dem Wischblatt 16, geleitet wird. Insbesondere sind die Ventilelemente 52, 54 als Dunlop-Ventile, als Membran-Ventile, als Federventile oder als Schrader-Ventile ausgebildet. Es ist auch denkbar, dass die Ventilelemente 52, 54 dazu vorgesehen sind, von dem Fluid und/oder von jeweils einem, insbesondere zumindest teilweise an jeweils einem Ventilelement 52, 54 angeordneten, Aktuierungselement 74 (siehe Figur 5) der Verbindungseinheit 50 mit der Öffnungskraft beaufschlagt zu werden, wobei die Aktuierungselemente 74 in den Figuren jeweils nur angedeutet dargestellt sind. Insbesondere sind die Aktuierungselemente 74 jeweils beispielsweise als ein Piezo-Element, als ein Linearaktuator, als ein Elektromagnet oder dergleichen ausgebildet. Die Ventilelemente 52, 54 sind dazu vorgesehen, den Fluidkanal 46 beziehungsweise den weiteren Fluidkanal 48 in Abhängigkeit von einer Zustandskenngröße des Fluids, insbesondere eines Fluids, das innerhalb eines an das Ventilelement 52, 54 angrenzenden Nahbereichs 76 des Fluidkanals 46 beziehungsweise des weiteren Fluidkanals 48 angeordnet ist, insbesondere wasserdicht, zu verschließen. Die Zustandskenngröße des Fluids ist als ein Druck beziehungsweise als ein Volumenstrom ausgebildet. Es sind aber auch andere Ausgestaltungen der Zustandskenngröße denkbar, beispielsweise als Temperatur und/oder als Fremdkörperanteil im Fluid.

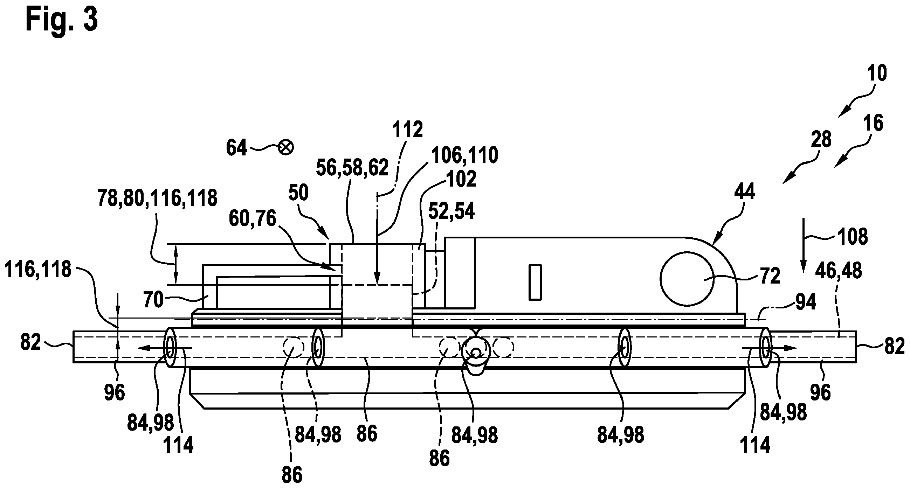

In Figur 3 ist eine schematische Seitenansicht der Wischblattadaptervorrichtung 28 gezeigt. Insbesondere ist in der Figur 3 zur besseren Übersicht lediglich der Fluidkanal 46 gezeigt. Der an die Ventilelemente 52, 54 angrenzende Nahbereich 76 der Fluidkanäle 46, 48 erstreckt sich innerhalb der Fluidkanäle 46, 48 in einem maximalen Abstand 78 von insbesondere höchstens 3 cm, vorzugsweise höchstens 2 cm und besonders bevorzugt höchstens 1 cm, um die Ventilelemente 52, 54. Die Ventilelemente 52, 54 sind dazu vorgesehen, bei einer Überschreitung zumindest eines Grenzwerts der Zustandskenngröße des innerhalb des Nahbereichs 76 angeordneten Fluids mechanisch auszulösen, wobei insbesondere der Fluidkanal 46 beziehungsweise der weitere Fluidkanal 48 bei einem Auslösen, insbesondere wasserdicht, verschlossen werden/wird. Insbesondere werden die Ventilelemente 52, 54 direkt über das Fluid, insbesondere über eine durch den Druck des Fluids auf die Ventilelemente 52, 54 ausgeübte Kraft, in den geschlossenen Zustand überführt. Besonders bevorzugt sind die Ventilelemente 52, 54 dazu vorgesehen, den Fluidkanal 46 beziehungsweise den weiteren Fluidkanal 48 in Abhängigkeit von der Zustandskenngröße des Fluids, insbesondere nach einem Absinken der Zustandskenngröße des Fluids unter den Grenzwert, zu öffnen oder freizugeben. Besonders bevorzugt beträgt ein minimaler Abstand 80 des Ventilelements 52 zur wischarmseitigen Einlassöffnung 56, insbesondere entlang des Fluidkanals 46 betrachtet, insbesondere höchstens 4 cm, vorzugsweise höchstens 3 cm, bevorzugt höchstens 2 cm und besonders bevorzugt höchstens 1 cm. Bevorzugt beträgt ein minimaler Abstand 80 des weiteren Ventilelements 54 zur weiteren wischarmseitigen Einlassöffnung 58, insbesondere entlang des weiteren Fluidkanals 48 betrachtet, insbesondere höchstens 4 cm, vorzugsweise höchstens 3 cm, bevorzugt höchstens 2 cm und besonders bevorzugt höchstens 1 cm. Insbesondere entspricht der minimale Abstand 80 des Ventilelements 52 zur wischarmseitigen Einlassöffnung 56 dem minimalen Abstand 80 des weiteren Ventilelements 54 zur weiteren wischarmseitigen Einlassöffnung 58.

Der Fluidkanal 46 weist sieben Auslassöffnungen 82, 84 auf, wobei die Auslassöffnungen 82, 84 über eine Vielzahl von Verzweigungen 86 des Fluidkanals 46, insbesondere fluidtechnisch, mit der wischarmseitigen Einlassöffnung 56 verbunden sind und wobei das Ventilelement 52 fluidtechnisch betrachtet zwischen der wischarmseitigen Einlassöffnung 56 und den Verzweigungen 86 angeordnet ist. Der weitere Fluidkanal 48 weist vier weitere Auslassöffnungen auf, wobei die weiteren Auslassöffnungen über eine Vielzahl von weiteren Verzweigungen des weiteren Fluidkanals 48, insbesondere fluidtechnisch, mit der weiteren wischarmseitigen Einlassöffnung 58 verbunden sind und wobei das weitere Ventilelement 54 fluidtechnisch betrachtet zwischen der weiteren wischarmseitigen Einlassöffnung 58 und den weiteren Verzweigungen angeordnet ist. Insbesondere sind die weiteren Auslassöffnungen und die weiteren Verzweigungen auf einer, einer Bildebene der Figur 3 abgewandten, Seite der Wischblattadaptervorrichtung 28 angeordnet und in den Figuren nicht gezeigt. Die Ventilelemente 52, 54 sind beabstandet von den Verzweigungen 86 angeordnet. Die Wischblattadaptervorrichtung 28, insbesondere die Fluidkanäle 46, 48, weisen eine Haupterstreckungsachse 94 auf, wobei insbesondere die Verzweigungen 86 der Fluidkanäle 46, 48 zumindest im Wesentlichen entlang der Haupterstreckungsachse 94 angeordnet sind. Zwei Auslassöffnungen 82 der sieben Auslassöffnungen 82, 84 des Fluidkanals 46 sind jeweils als Teil eines Anschlussstutzens 96 zu einer Verbindung des Fluidkanals 46 mit der Wischleiste 26, insbesondere einem der Fluidleitelemente 30 der Wischleiste 26, ausgebildet. Fünf Auslassöffnungen 84 der sieben Auslassöffnungen 82, 84 des Fluidkanals 46 sind jeweils als Teil einer Düse 98 zur Ausgabe des Fluids auf die Scheibe 12 ausgebildet. Zwei weitere Auslassöffnungen der vier weiteren Auslassöffnungen des weiteren Fluidkanals 48 sind jeweils als Teil eines Anschlussstutzens 100 zu einer Verbindung des weiteren Fluidkanals 48 mit der Wischleiste 26, insbesondere eines anderen der Fluidleitelemente 30 der Wischleiste 26, ausgebildet. Zwei andere weitere Auslassöffnungen der vier weiteren Auslassöffnungen des weiteren Fluidkanals 48 sind jeweils als Teil einer Düse zur Ausgabe des Fluids auf die Scheibe 12 ausgebildet, wobei die Düsen in den Figuren nicht gezeigt sind. Die Verbindungseinheit 50 umfasst zwei Anschlussstutzen 102, 104, insbesondere einen Anschlussstutzen 102 und einen weiteren Anschlussstutzen 104, die zu einer kraft- und/oder formschlüssigen Verbindung mit dem Fluidleitungselement 34, insbesondere den Fortsätzen 66 des Fluidleitungselements 34, vorgesehen sind (siehe auch Figur 2). Das Ventilelement 52 ist zumindest teilweise innerhalb des Anschlussstutzens 102 angeordnet. Das weitere Ventilelement 54 ist zumindest teilweise innerhalb des weiteren Anschlussstutzens 104 angeordnet. Insbesondere umfassen die Anschlussstutzen 102, 104 jeweils die wischarmseitige Einlassöffnung 56 oder die weitere wischarmseitige Einlassöffnung 58. Die Anschlussstutzen 102, 104 begrenzen jeweils den Fluidkanal 46 oder den weiteren Fluidkanal 48, insbesondere in einem Bereich der wischarmseitigen Einlassöffnungen 56, 58, zumindest teilweise. Die Ventilelemente 52, 54 sind jeweils zumindest teilweise innerhalb eines von einem der Anschlussstutzen 102, 104 begrenzten Bereichs des Fluidkanals 46 beziehungsweise des weiteren Fluidkanals 48 angeordnet.

Die Ventilelemente 52, 54 weisen jeweils eine Sperr- und/oder Durchlassrichtung 106 auf, die parallel zueinander angeordnet sind. Die Ventilelemente 52, 54 sind derart angeordnet, dass die Sperr- und/oder Durchlassrichtungen 106 zumindest im Wesentlichen parallel zu einer Verbindungsrichtung 108 der Verbindungseinheit 50 ausgerichtet sind. Vorzugsweise ist die Verbindungseinheit 50, insbesondere die Anschlussstutzen 102, 104, dazu vorgesehen, über eine Bewegung in die Verbindungsrichtung 108 mit dem Fluidleitungselement 34 verbunden zu werden. Die Ventilelemente 52, 54 sind jeweils dazu vorgesehen, den Fluidkanal 46 oder den weiteren Fluidkanals 48 gegenüber einem in die Sperr- und/oder Durchlassrichtung 106 strömenden Fluid verschließbar auszubilden. Die Ventilelemente 52, 54 sind derart angeordnet, dass die Sperr- und/oder Durchlassrichtung 106 zumindest im Wesentlichen senkrecht zu der Haupterstreckungsachse 94 der Wischblattadaptervorrichtung 28, insbesondere den Fluidkanälen 46, 48 und/oder dem Grundkörper 44, ausgerichtet ist. Die wischarmseitigen Einlassöffnungen 56, 58 sind jeweils zumindest im Wesentlichen senkrecht zur Sperr- und/oder Durchlassrichtung 106 der Ventilelemente 52, 54 ausgerichtet, wobei insbesondere jeweils eine Einlassrichtung 110 und/oder eine Mittelachse 112 der wischarmseitige Einlassöffnungen 56, 58 zumindest im Wesentlichen parallel zur Sperr- und/oder Durchlassrichtung 106 ausgerichtet sind/ist. Bevorzugt erstrecken sich die Einlassrichtungen 110 jeweils entlang der Mittelachsen 112 der wischarmseitigen Einlassöffnungen 56, 58. Insbesondere weisen die Auslassöffnungen 82, 84 jeweils zumindest eine Auslassrichtung 114 auf, wobei die Ventilelemente 52, 54 derart angeordnet sind, dass die Sperr- und/oder Durchlassrichtung 106 zumindest schräg zu den Auslassrichtungen 114 ausgerichtet ist. Das Ventilelement 52 ist derart angeordnet, dass der Fluidkanal 46 in einem minimalen Abstand 116 in und/oder entgegen die Sperr- und/oder Durchlassrichtung 106 von insbesondere mindestens 0,5 cm, vorzugsweise mindestens 1 cm und besonders bevorzugt mindestens 1,5 cm, von dem Ventilelement 52 zumindest im Wesentlichen geradlinig ausgebildet ist. Das weitere Ventilelement 54 ist derart angeordnet, dass der weitere Fluidkanal 48 in einem minimalen Abstand 116 in und/oder entgegen die Sperr- und/oder Durchlassrichtung 106 von mindestens 0,5 cm, vorzugsweise mindestens 1 cm und besonders bevorzugt mindestens 1,5 cm, von dem weiteren Ventilelement 54 zumindest im Wesentlichen geradlinig ausgebildet ist. Insbesondere entspricht der minimale Abstand 116 von dem Ventilelement 52 dem minimalen Abstand 116 von dem weiteren Ventilelement 54. Besonders bevorzugt beträgt jeweils ein minimaler Abstand 118 der Ventilelemente 52, 54 zu einer der Verzweigungen 86, insbesondere entlang des Fluidkanals 46 beziehungsweise des weiteren Fluidkanals 48 betrachtet, insbesondere mindestens 0,5 cm, vorzugsweise mindestens 1 cm, und besonders bevorzugt mindestens 1,5 cm. Der Fluidkanal 46 ist in einem Bereich zwischen dem Ventilelement 52 und den Verzweigungen 86 zumindest im Wesentlichen geradlinig ausgebildet. Der weitere Fluidkanal 48 ist in einem Bereich zwischen dem weiteren Ventilelement 54 und den weiteren Verzweigungen zumindest im Wesentlichen geradlinig ausgebildet. Es sind aber auch andere Ausgestaltungen des Fluidkanals 46 und/oder des weiteren Fluidkanals 48 denkbar.

In Figur 4 und Figur 5 ist jeweils die Wischblattadaptervorrichtung 28 mit dem Fluidleitungselement 34 in einem demontierten Zustand beziehungsweise einem montierten Zustand der Ventilelemente 52, 54 gezeigt. Insbesondere sind die Verbindungseinheit 50 und das Fluidleitungselement 34 in der Figur 4 und der Figur 5 in einem getrennten Zustand gezeigt. Die weitere wischarmseitige Einlassöffnung 58, insbesondere eine Einlassrichtung 110 der weiteren wischarmseitigen Einlassöffnung 58, ist zumindest im Wesentlichen parallel zur wischarmseitigen Einlassöffnung 56, insbesondere der Einlassrichtung 110 der wischarmseitigen Einlassöffnung 56, ausgerichtet. Die weitere wischarmseitige Einlassöffnung 58 ist zumindest im Wesentlichen senkrecht zur Haupterstreckungsachse 94 und/oder entlang der Verbindungsrichtung 108 betrachtet in zumindest eine Versatzrichtung 64 versetzt zur wischarmseitigen Einlassöffnung 56 angeordnet. Die Ventilelemente 52, 54 sind in einem unbefestigten Zustand gezeigt und insbesondere zumindest teilweise durch die wischarmseitigen Einlassöffnungen 56, 58 aus den Fluidkanälen 46, 48 herausgezogen. In der Figur 5 sind die Ventilelemente 52, 54 in einem an der Verbindungseinheit 50 beziehungsweise dem Grundkörper 44 befestigten Zustand gezeigt. Die Ventilelemente 52, 54 sind an der Verbindungseinheit 50 befestigt, wobei die Ventilelemente 52, 54 zusammen mit dem Wischblatt 16 wechselbar ausgebildet sind. Die Ventilelemente 52, 54 sind über eine stoffschlüssige Verbindung an der Verbindungseinheit 50 befestigt. Es ist aber auch denkbar, dass die Ventilelemente 52, 54 einstückig mit der Verbindungseinheit 50 und/oder dem Grundkörper 44 ausgebildet sind. Die Ventilelemente 52, 54 sind, insbesondere hinsichtlich einer Position der Ventilelemente 52, 54 relativ zur Verbindungseinheit 50, unabhängig von einem Verbindungszustand der Verbindungseinheit 50 mit dem Fluidleitungselement 34 ausgebildet. Insbesondere sind die Ventilelemente 52, 54 in einem verbundenen Zustand der Verbindungseinheit 50 und des Fluidleitungselements 34 und/oder bei einem Verbinden der Verbindungseinheit 50 mit dem Fluidleitungselement 34 beabstandet von dem Fluidleitungselement 34 ausgebildet. Es ist aber auch denkbar, dass die Ventilelemente 52, 54 in einem verbundenen Zustand der Verbindungseinheit 50 und des Fluidleitungselements 34 und/oder bei einem Verbinden der Verbindungseinheit 50 mit dem Fluidleitungselement 34 mit dem Fluidleitungselement 34 zusammenwirken.

In einer alternativen Ausgestaltung der Wischblattadaptervorrichtung 28 ist denkbar, dass die Ventilelemente 52, 54 elektrisch, elektronisch, mechanisch, pneumatisch und/oder hydraulisch ansteuerbar ausgebildet sind. Insbesondere sind die Ventilelemente 52, 54 in der alternativen Ausgestaltung dazu vorgesehen, bei einer Ansteuerung in den geschlossenen oder den geöffneten Zustand zu wechseln. Es ist denkbar, dass die Wischblattadaptervorrichtung 28 zumindest eine Kommunikations- und/oder Leitungseinheit 120 umfasst, die dazu vorgesehen ist, die Ventilelemente 52, 54 mit der Steuer- und/oder Regeleinheit 38 des Scheibenwischers 10 zu verbinden. Insbesondere ist die Kommunikations- und/oder Leitungseinheit 120 in der Figur 5 schematisch an der Wischblattadaptervorrichtung 28 gezeigt. Vorzugsweise umfasst die Kommunikations- und/oder Leitungseinheit 120 zumindest ein Kommunikations- und/oder Leitungselement 122, das an den Ventilelementen 52, 54 angeordnet ist. Vorzugsweise ist das Kommunikations- und/oder Leitungselement 122 zu einer Übertragung zumindest eines elektronischen Signals von der Steuer- und/oder Regeleinheit 38 an zumindest eines der Ventilelemente 52, 54, insbesondere zu einer Steuerung und/oder Regelung des Ventilelements 52, 54, vorgesehen. Insbesondere in einer Ausgestaltung der Wischblattadaptervorrichtung 28, bei der die Ventilelemente 52, 54 elektrisch und/oder elektronisch ansteuerbar sind, ist denkbar, dass das Kommunikations- und/oder Leitungselement 122 dazu vorgesehen ist, Steuersignale der Steuer- und/oder Regeleinheit 38, insbesondere zur Steuerung und/oder Regelung der Ventilelemente 52, 54, über eine drahtlose Verbindung, beispielsweise eine Funkverbindung und/oder eine induktionsbasierte Verbindung, an die Ventilelemente 52, 54 zu übertragen. Insbesondere sind die Ventilelemente 52, 54 dazu vorgesehen, in Abhängigkeit von den übertragenen Steuerbefehlen in den geschlossenen oder den geöffneten Zustand zu wechseln. Zusätzlich ist denkbar, dass die Steuer- und/oder Regeleinheit 38 dazu vorgesehen ist, bevorzugt über die Kommunikations- und/oder Leitungseinheit 120, insbesondere das Kommunikations- und/oder Leitungselement 122, die Aktuierungselemente 74 zu einem Öffnen der Ventilelemente 52, 54 anzusteuern. Bevorzugterweise sind die Aktuierungselemente 74 in der alternativen Ausgestaltung dazu vorgesehen, bei einer Ansteuerung durch die Steuer- und/oder Regeleinheit 38 das Ventilelement 52 und/oder das weitere Ventilelement 54 zu einem Öffnen des Fluidkanals 46 und/oder des weiteren Fluidkanals 48 mit einer Öffnungskraft zu beaufschlagen.

## Patentansprüche

1. Wischblattadaptervorrichtung mit zumindest einem Fluidkanal (46, 48) zur Leitung eines Fluids, mit zumindest einer Verbindungseinheit (50) zu einer, insbesondere fluidtechnischen, Verbindung des Fluidkanals (46, 48) mit einem Wischarm (14), insbesondere zumindest einem Fluidleitungselement (34) des Wischarms (14), und mit zumindest einem Ventilelement (52, 54), das dazu vorgesehen ist, die fluidtechnische Verbindung des Fluidkanals (46, 48) mit dem Wischarm (14), insbesondere dem Fluidleitungselement (34), verschließbar auszubilden, **dadurch gekennzeichnet, dass** das Ventilelement (52, 54) zumindest eine Sperr- und/oder Durchlassrichtung (106) aufweist, und derart angeordnet ist, dass die Sperr- und/oder Durchlassrichtung (106) zumindest im Wesentlichen parallel zu einer Verbindungsrichtung (108) der Verbindungseinheit (50) ausgerichtet ist, wobei die Verbindungseinheit (50) zumindest einen Anschlussstutzen (102, 104) umfasst, der zu einer kraft- und/oder formschlüssigen Verbindung mit dem Fluidleitungselement (34) vorgesehen ist, und wobei das Ventilelement (52, 54) zumindest teilweise innerhalb des Anschlussstutzens (102, 104) angeordnet ist und mechanisch, pneumatisch und/oder hydraulisch ansteuerbar ausgebildet ist.

2. Wischblattadaptervorrichtung nach Anspruch 1, **dadurch gekennzeichnet, dass** die Verbindungseinheit (50) zumindest eine wischarmseitige Einlassöffnung (56, 58) des Fluidkanals (46, 48) umfasst, die zu einer Verbindung mit dem Fluidleitungselement (34) vorgesehen ist, wobei das Ventilelement (52, 54) in einem Nahbereich (60) der wischarmseitigen Einlassöffnung (56, 58) angeordnet ist.

3. Wischblattadaptervorrichtung nach Anspruch 2, **dadurch gekennzeichnet, dass** der Fluidkanal (46, 48) zumindest zwei Auslassöffnungen (82, 84) aufweist, wobei die Auslassöffnungen (82, 84) über zumindest eine Verzweigung (86) des Fluidkanals (46, 48), insbesondere fluidtechnisch, mit der wischarmseitigen Einlassöffnung (56, 58) verbunden sind und wobei das Ventilelement (52, 54) fluidtechnisch betrachtet zwischen der wischarmseitigen Einlassöffnung (56, 58) und der Verzweigung (86) angeordnet ist.

4. Wischblattadaptervorrichtung nach einem der vorhergehenden Ansprüche, **dadurch gekennzeichnet, dass** das Ventilelement (52, 54) zumindest eine Sperr- und/oder Durchlassrichtung (106) aufweist, wobei das Ventilelement (52, 54) derart angeordnet ist, dass der Fluidkanal (46, 48) in einem minimalen Abstand (116) in und/oder entgegen die Sperr- und/oder Durchlassrichtung (106) von mindestens 0,5 cm von dem Ventilelement (52, 54) zumindest im Wesentlichen geradlinig ausgebildet ist.

5. Wischblattadaptervorrichtung nach einem der vorhergehenden Ansprüche, **dadurch gekennzeichnet, dass** das Ventilelement (52, 54) an der Verbindungseinheit (50) befestigt ist und/oder einstückig mit der Verbindungseinheit (50) ausgebildet ist, wobei das Ventilelement (52, 54) zusammen mit einem Wischblatt (16) wechselbar ausgebildet ist.

6. Wischblattadaptervorrichtung zumindest nach Anspruch 2, **gekennzeichnet durch** zumindest ein weiteres Ventilelement (52, 54), wobei die Verbindungseinheit (50) zumindest eine, insbesondere getrennt von der wischarmseitigen Einlassöffnung (56, 58) ausgebildete, weitere wischarmseitige Einlassöffnung (56, 58) umfasst und wobei das weitere Ventilelement (52, 54) in einem Nahbereich (60) der weiteren wischarmseitigen Einlassöffnung (56, 58) angeordnet ist.

7. Wischblatt mit zumindest einer Wischblattadaptervorrichtung (28) nach einem der vorhergehenden Ansprüche.

8. Scheibenwischer mit zumindest einem Wischarm (14) und mit zumindest einem Wischblatt (16) nach Anspruch 7.

## Claims

1. Wiper blade adapter device having at least one fluid channel (46, 48) for conducting a fluid, having at least one connecting unit (50) for connecting the fluid channel (46, 48), in particular fluidically, to a wiper arm (14), in particular to at least one fluid line element (34) of the wiper arm (14), and having at least one valve element (52, 54), which is provided to make the fluidic connection of the fluid channel (46, 48) to the wiper arm (14), in particular to the fluid line element (34), closable, **characterized in that** the valve element (52, 54) has at least one blocking and/or passage direction (106), and is arranged in such a manner that the blocking and/or passage direction (106) are/is aligned at least substantially parallel with a connecting direction (108) of the connecting unit (50), wherein the connecting unit (50) comprises at least one connector (102, 104), which is provided for force-fitting and/or form-fitting connection to the fluid line element (34), and wherein the valve element (52, 54) is at least partially arranged within the connector (102, 104) and is activatable mechanically, pneumatically and/or hydraulically.

2. Wiper blade adapter device according to Claim 1, **characterized in that** the connecting unit (50) comprises at least one wiper-arm-side inlet opening (56, 58) of the fluid channel (46, 48), the inlet opening being provided for connecting to the fluid line element (34), wherein the valve element (52, 54) is arranged within a close range (60) of the wiper-arm-side inlet opening (56, 58).

3. Wiper blade adapter device according to Claim 2, **characterized in that** the fluid channel (46, 48) has at least two outlet openings (82, 84), wherein the outlet openings (82, 84) are connected via at least one branch (86) of the fluid channel (46, 48), in particular fluidically, to the wiper-arm-side inlet opening (56, 58), and wherein the valve element (52, 54), as viewed fluidically, is arranged between the wiper-arm-side inlet opening (56, 58) and the branch (86).

4. Wiper blade adapter device according to one of the preceding claims, **characterized in that** the valve element (52, 54) has at least one blocking and/or passage direction (106), wherein the valve element (52, 54) is arranged in such a manner that the fluid channel (46, 48) is formed at least substantially rectilinearly at a minimum distance (116) of at least 0.5 cm from the valve element (52, 54) in and/or counter to the blocking and/or passage direction (106).

5. Wiper blade adapter device according to one of the preceding claims, **characterized in that** the valve element (52, 54) is fastened to the connecting unit (50) and/or is formed integrally with the connecting unit (50), wherein the valve element (52, 54) is designed to be exchangeable together with a wiper blade (16).

6. Wiper blade adapter device at least according to Claim 2, **characterized by** at least one further valve element (52, 54), wherein the connecting unit (50) comprises at least one further wiper-arm-side inlet opening (56, 58), which is formed in particular separately from the wiper-arm-side inlet opening (56, 58), and wherein the further valve element (52, 54) is arranged within a close range (60) of the further wiper-arm-side inlet opening (56, 58).

7. Wiper blade having at least one wiper blade adapter device (28) according to one of the preceding claims.

8. Windscreen wiper having at least one wiper arm (14) and having at least one wiper blade (16) according to Claim 7.

## Revendications

1. Dispositif d'adaptateur de balai d'essuie-glace avec au moins un canal de fluide (46, 48) pour conduire un fluide, avec au moins une unité de liaison (50) pour une liaison, notamment fluidique, du canal de fluide (46, 48) avec un bras d'essuie-glace (14), notamment au moins un élément de conduite de fluide (34) du bras d'essuie-glace (14), et avec au moins un élément de soupape (52, 54) qui est prévu pour réaliser de manière obturable la liaison fluidique du canal de fluide (46, 48) avec le bras d'essuie-glace (14), notamment l'élément de conduite de fluide (34), **caractérisé en ce que** l'élément de soupape (52, 54) présente au moins une direction de blocage et/ou de passage (106), et est agencé de telle sorte que la direction de blocage et/ou de passage (106) est orientée au moins essentiellement parallèlement à une direction de liaison (108) de l'unité de liaison (50), l'unité de liaison (50) présentant au moins une tubulure de raccordement (102, 104), qui est prévue pour une liaison par force et/ou par complémentarité de forme avec l'élément de conduite de fluide (34), et l'élément de soupape (52, 54) étant agencé au moins partiellement à l'intérieur de la tubulure de raccordement (102, 104) et étant réalisé de manière à pouvoir être commandé mécaniquement, pneumatiquement et/ou hydrauliquement.

2. Dispositif d'adaptateur de balai d'essuie-glace selon la revendication 1, **caractérisé en ce que** l'unité de liaison (50) comprend au moins une ouverture d'entrée côté bras d'essuie-glace (56, 58) du canal de fluide (46, 48) qui est prévue pour une liaison avec l'élément de conduite de fluide (34), l'élément de soupape (52, 54) étant agencé dans une zone proche (60) de l'ouverture d'entrée côté bras d'essuie-glace (56, 58).

3. Dispositif d'adaptateur de balai d'essuie-glace selon la revendication 2, **caractérisé en ce que** le canal de fluide (46, 48) présente au moins deux ouvertures de sortie (82, 84), les ouvertures de sortie (82, 84) étant reliées par l'intermédiaire d'au moins une ramification (86) du canal de fluide (46, 48), notamment de manière fluidique, à l'ouverture d'entrée (56, 58) côté bras d'essuie-glace, et l'élément de soupape (52, 54) étant agencé, de manière fluidique, entre l'ouverture d'entrée (56, 58) côté bras d'essuie-glace et la ramification (86) .

4. Dispositif d'adaptateur de balai d'essuie-glace selon l'une quelconque des revendications précédentes, **caractérisé en ce que** l'élément de soupape (52, 54) présente au moins une direction de blocage et/ou de passage (106), l'élément de soupape (52, 54) étant agencé de telle sorte que le canal de fluide (46, 48) est réalisé sous forme au moins essentiellement rectiligne à une distance minimale (116) dans la direction de blocage et/ou de passage (106) et/ou à l'encontre de celle-ci d'au moins 0,5 cm de l'élément de soupape (52, 54).

5. Dispositif d'adaptateur de balai d'essuie-glace selon l'une quelconque des revendications précédentes, **caractérisé en ce que** l'élément de soupape (52, 54) est fixé à l'unité de liaison (50) et/ou est réalisé d'un seul tenant avec l'unité de liaison (50), l'élément de soupape (52, 54) étant réalisé de manière à pouvoir être remplacé conjointement avec un balai d'essuie-glace (16).

6. Dispositif d'adaptateur de balai d'essuie-glace au moins selon la revendication 2, **caractérisé par** au moins un autre élément de soupape (52, 54), l'unité de liaison (50) comprenant au moins une autre ouverture d'entrée (56, 58) côté bras d'essuie-glace, réalisée notamment séparément de l'ouverture d'entrée (56, 58) côté bras d'essuie-glace, et l'autre élément de soupape (52, 54) étant agencé dans une zone proche (60) de l'autre ouverture d'entrée (56, 58) côté bras d'essuie-glace.

7. Balai d'essuie-glace avec au moins un dispositif d'adaptateur de balai d'essuie-glace (28) selon l'une quelconque des revendications précédentes.

8. Essuie-glace avec au moins un bras d'essuie-glace (14) et avec au moins un balai d'essuie-glace (16) selon la revendication 7.
